# EUROPEAN PATENT SPECIFICATION

(11) **EP 4 164 380 B1**
(45) Date of publication and mention of the grant of the patent: **15.10.2025**
(21) Application number: 21733093.5
(22) Date of filing: 10.06.2021
(51) Int. Cl.: A01M 27/00, A01M 23/36

(54) **A RECHARGEABLE TRAP WITH PISTONS OR SPEARS OF VARYING WEIGHTS**
WIEDERAUFLADBARE FALLE MIT KOLBEN ODER SPEEREN MIT UNTERSCHIEDLICHEN GEWICHTEN
PIÈGE RECHARGEABLE À PISTONS OU LANCES DE POIDS VARIABLES

(30) Priority: 15.06.2020 DK PA202000696
(43) Date of publication of application: 19.04.2023
(73) Proprietor: Camro A/S, 9610 Nørager (DK)
(72) Inventor: SØRENSEN, Kurt, 9610 Nørager (DK)
(74) Representative: Larsen & Birkeholm A/S
(86) International application number: PCT/EP2021/065617
(87) International publication number: WO 2021/254871

(56) References cited:
- EP-A1- 3 527 075
- WO-A1-2018/224111
- WO-A1-2021/133177
- US-A1- 2011 296 739
- US-B2- 9 615 566

## Description

### Technical field of the invention

The present invention relates to the field of traps, especially for rodents.

### Background of the invention

Inherent flaws in the basic design of traps to date create problems with non-target bycatch issues, when birds, lizards, snakes, kittens, etc. are caught in traps set for pests, inciting negative public reaction. Other types of traps, such as live capture cage traps and leg-hold traps, have the disadvantage of being much bulkier and/or of heavy construction. They merely restrain rather than kill the animals, and unless checked regularly at short time intervals will cause captured animals unnecessary stress and suffering.

As concern for animal rights grows worldwide, and international animal welfare regulations become more stringent, particularly in relation to perceived indiscriminate use of toxins and inefficient traps, the number and type of traps available is diminishing.

A known trap is described by document US 2011/296739 A1.

### Object of the Invention

The objective of the present invention is to provide a rechargeable trap adapted for reducing non-target bycatches.

### Description of the Invention

Mechanical traps are characterised by killing means that strikes the rodent and almost instantly kills the rodent. The killing means in mechanical traps are normally spring driven or gas pressure driven and may be recharged by electrical means or gas pressure driven means. The present invention is defined by the subject-matter of independent claims 1 and 11. Particular embodiments of the invention are defined in the dependent claims.

The advantage of using a trap that can regulate the weight of the piston or spear is that the trap can be prepared for different types of target species. A relatively lightweight piston or spear may be suitable for killing e.g. mice, whereas a relatively heavier piston or spear is suitable for killing e.g. rats or even larger animals.

In one or more embodiments, the killing means comprises:
- a piston or spear with a replaceable core, and
- a kit of cores of varying weights adapted for replacing said replaceable core.

In one or more embodiments, the piston or spear comprises a cavity adapted for receiving the core.

In one or more embodiments, the piston or spear comprises a cavity adapted for receiving a threaded core. The cavity is not necessarily threaded and is preferably smooth. This configuration secures that the core is properly fastened within the piston or spear's cavity without the use of glue. Furthermore, it allows for an easy exchange of cores. Preferably, the core is shaped as a set screw, thereby allowing for complete insertion into the piston or spear's cavity.

The advantage of such an insert as mentioned above is that the user can choose to restrict certain non-target species from entering the trap compartment (or at least preventing non-target species from triggering a trigger mechanism adapted for releasing the piston or spear) and at the same time allowing a target species to enter. This is important if the user has installed e.g. a piston or spear for killing a mouse. If a rat enters, there is a substantial risk that the piston or spear will only invalidate the rat rather than killing it. In this way, the housing may be used for different targets. The insert may be made from any suitable material that a rodent is not prone to gnaw in, such as metal, preferably steel, plastic, or composite materials.

The housing may be made from any suitable material, such as metal, plastic, composites, concrete, or the like.

One type of insert may e.g. comprise an opening sized and shaped to prevent a rat from passing therethrough, and at the same time allowing a mouse to pass. Such an opening may have a diameter of 5-18 mm, and preferably a diameter of 10-17 mm, and even more preferably a diameter of 15-17 mm. Another type of insert may e.g. comprise an opening sized and shaped to prevent a bird and/or a squirrel from passing therethrough, and at the same time allowing a rat to pass. Such an opening may have a diameter of 19-30 mm, and preferably a diameter of 20-28 mm, and even more preferably a diameter of 22-24 mm.

In one or more embodiments, the kit of inserts comprises:
- a first insert with an opening having a diameter of 5-18 mm, and preferably a diameter of 10-17 mm, and even more preferably a diameter of 15-17 mm; and
- a second insert with an opening having a diameter of 19-30 mm, and preferably a diameter of 20-28 mm, and even more preferably a diameter of 22-24 mm.

Often, a scent attractant is positioned within the feeding and/or trap compartment to lure the target species therein. In such a situation, it may be an advantage to allow as much as possible of the scent to escape through the insert.

In one or more embodiments, the insert is perforated with holes and/or slots. Preferably, the holes have a diameter of 3-8 mm, preferably about 5 mm, such as within the range of 4-7 mm, e.g. 5-6 mm. Preferably, the slots have a width of 3-8 mm, preferably about 5 mm, such as within the range of 4-7 mm, e.g. 5-6 mm.

It may be an advantage if the target species can enter the housing through a channel or via a hallway within which it may hide. The channel or hallway may be without a floor in order to make the target species feel safe by being able to move around, hide, and rest on a familiar surface. In one or more embodiments, the housing further comprises a channel or hallway leading to said entrance. Preferably, the channel or hallway is without a floor. In some embodiments, the hallway may comprise one or more entry openings, preferably multiple entry openings. Such an opening may be an opening similar in size as the above-mentioned insert. The opening may be restricted in size by inserts, and hence, the trap may comprise a kit of inserts, each insert suitable for being inserted into an opening in a hallway. The openings in the hallway may be provided with one or more rows of serrated protrusions. When a larger animal, a child, or even a curious adult tries to force the paw/hand through the opening, the response of withdrawal is immediate due to the unpleasant sensation of the serrated protrusions.

The use of the term "serrated" or "serrations" in this disclosure will generally be used to refer to an object having teeth, ridges, peaks, points, projections and/or protrusions extending from the surface thereof. These serrations can be of any shape, preferably having points or sharp edges. Further, although a serration is generally referred to as extending from a surface, one of skill in the art would recognize that a serration may be formed by removing portions of a surface to form valleys, troughs or the like resulting in the creation of corresponding serrations extending from a new surface.

In one or more embodiments, the entrance and/or opening in the channel or hallway has a width of at least 40 mm, such as within the range of 40-100 mm, e.g. at least 45 mm, such as within the range of 45-95 mm, e.g. at least 50 mm, such as within the range of 50-90 mm, e.g. at least 55 mm, such as within the range of 55-85 mm, e.g. at least 60 mm, such as within the range of 60-80 mm, e.g. at least 65 mm, such as within the range of 70-75 mm, e.g. at least 70 mm.

In order to further reduce the non-target poisonings and bycatches, it may be an advantage to equip the entrance with a gnaw through plate blocking the passage. Thereby, only rodents are prone to enter the entrance. A gnaw through plate suitable for a rat and/or mouse to gnaw through may be of many types, such as a material comprising or consisting of a polymer material, a starch material, a lignin material, such as cardboard, a protein material, or the like. Preferably, the material is un-dissolvable by snails or slugs.

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

It should be noted that embodiments and features described in the context of one of the aspects of the present invention also apply to the other aspects of the invention.

### Brief description of the figures

Figure 1 is a partly exploded and perspective view of a trap in accordance with various embodiments of the invention;
Figure 2 is a cross-sectional view of a trap in accordance with various embodiments of the invention;
Figure 3 shows a piston or spear in accordance with various embodiments of the invention;
Figure 4 is a cross-sectional view of a piston or spear in accordance with various embodiments of the invention; and
Figure 5 shows an insert in accordance with various embodiments of the invention.

### References

| | |
|---|---|
| 100 | Trap |
| 110 | Killing means |
| 120 | Trigger rod |
| 130 | Gas tank |
| 150 | Lure/bait housing |
| 160 | Spring |
| 200 | Piston or spear |
| 210 | Core |
| 220 | Cavity |
| 300 | Housing |
| 310 | Entrance |
| 400 | Insert |
| 500 | hallway |
| 510 | Entry opening |
| 520 | Serrated protrusions |

### Detailed Description of the Invention

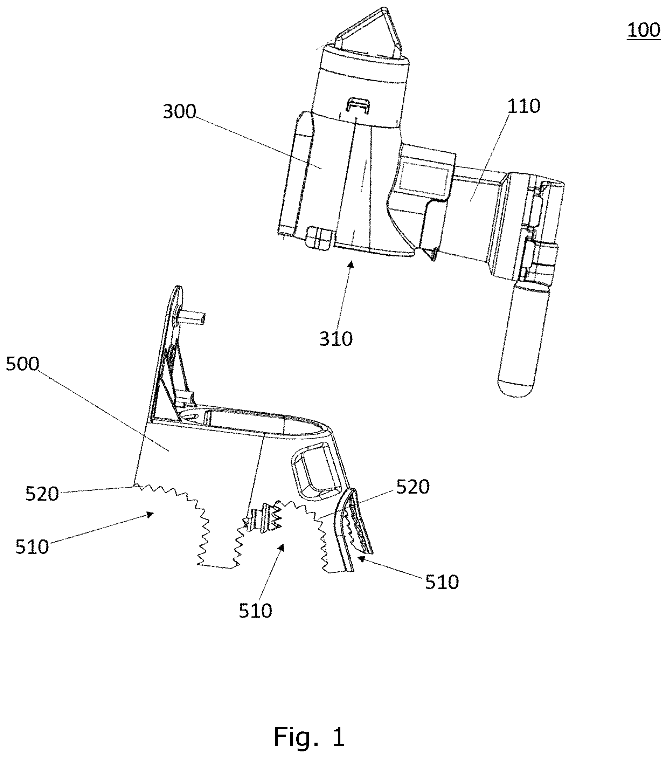

Figure 1 is a partly exploded and perspective view of a trap 100 in accordance with various embodiments of the invention and is not meant to be limiting for the scope of the invention. The trap 100 comprises a spring driven, and gas pressure driven killing means 110, a housing 300 with an entrance 310, and a hallway 500 leading to said entrance 310. Here, the spring 160 secures that the piston or spear is retracted after being released/fired by gas propulsion.

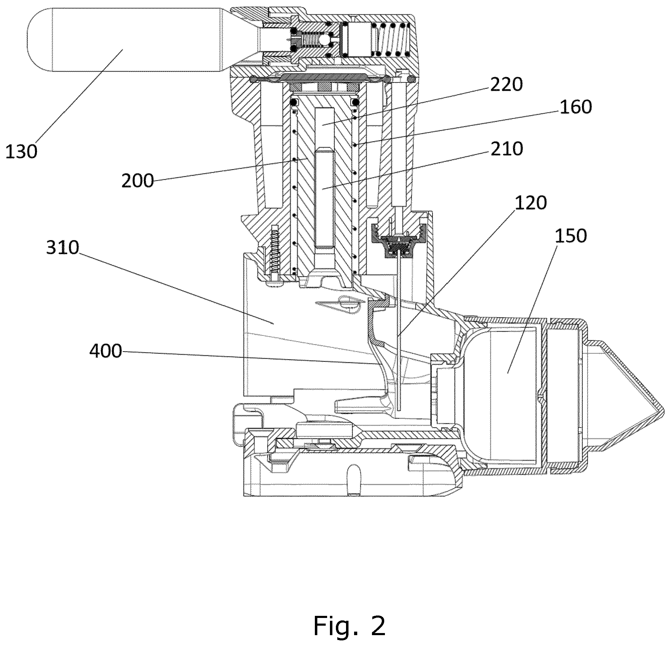

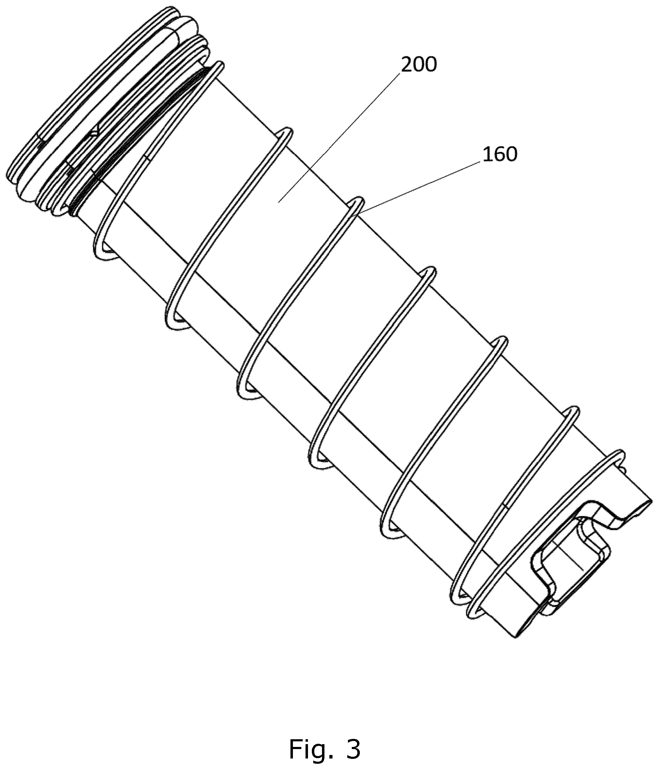

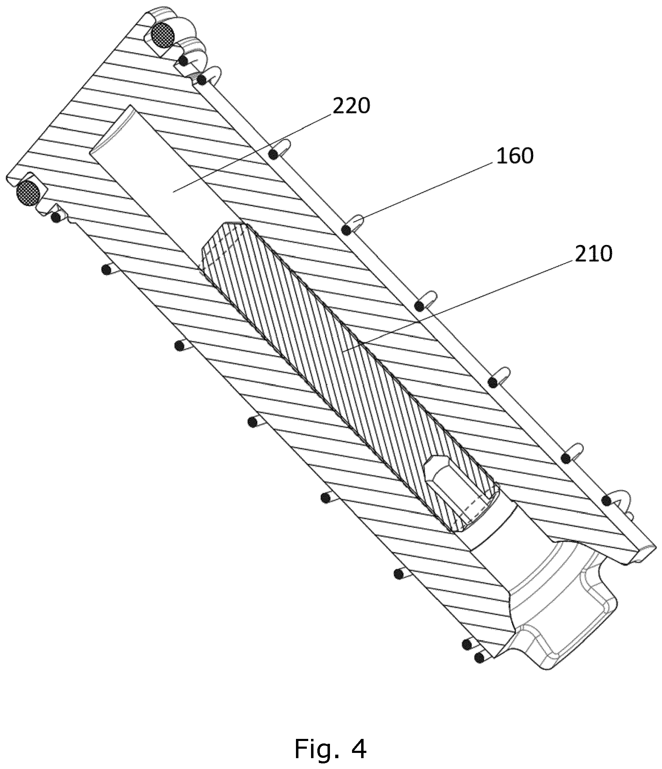

Figure 2 is a cross-sectional view of a trap 100 in accordance with various embodiments of the invention. The trap 100 is here shown with a piston or spear 200 comprising a smooth cavity 220 with a replaceable core 210 positioned therein. The core 210 may be selected from a kit of cores of varying weights. The weight of the core 210 can be varied by keeping the volume fixed and changing its density, e.g. by providing cores of different material. Alternatively, or in combination, the length or width of the core 210 may be varied. In the shown embodiment, only the length and the density may be varied due to the limitation of the cavity width. It is important that the core 210 is fixed within the cavity 220 since it would otherwise not provide the same impact on a target species when the piston or spear strikes. Furthermore, it may otherwise damage the other components of the piston or spear. Hence, it is advantageous that the piston or spear 200 comprises a cavity 220 adapted for receiving a threaded core 210. The piston or spear 200 is both gas driven, and spring driven. The gas tank 130 (Figures 1 and 2) and the spring 160 (Figures 2-4) are shown in some of the figures. The piston or spear 200 is activated by the trigger rod 120 and is shown in a retracted position. Apart from the cavity, the piston or spear 200 is preferably made from a polymeric material that is preferably injection mouldable, such as plastic, e.g. polyethylene, polyoxymethylene, or polyethylene. The piston or spear 200 could though be made of metal, such as steel or the like.

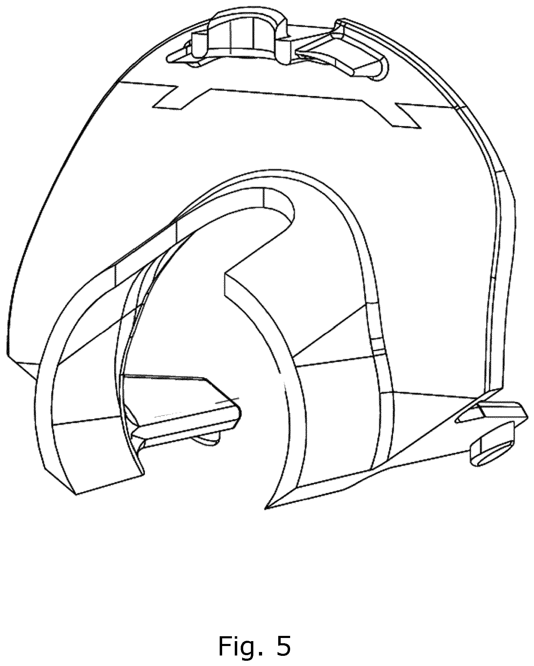

The trap housing 300 (Figures 1 and 2) with an entrance 310. An insert 400 is positioned (releasably fastened) within the entrance 310 and in front of the trigger rod 120 and lure/bait housing 150. The intention is that only targeted animals can reach the trigger rod 120. Hence, the insert 400 is adapted for restricting the height and width of the entrance 310, and may be selected from a kit of inserts, each adapted for targeting a specific animal/specie. An example of an insert 400 may be seen in Figure 5, and may have many different shapes, depending on the shape of the entrance into which it is inserted.

A further means to reduce non-targeted species is to mount a hallway 500 (Figure 1) in front of the entrance 310. The hallway 500 is here exemplified with five entry openings 510 (only four may be seen). The entry openings 510 each have a size restricting non-target species from entering the hallway 500, such as larger non-target species, e.g. cats. The entry openings 510 are provided with serrated protrusions 520 to further discourage non-target species form e.g. trying to insert their paws or hands into the entrance 310 via the hallway 500.

## Claims

1. A rechargeable trap (100) comprising:
- a spring driven and/or gas pressure driven killing means (110); said killing means comprising:
i) a piston or spear (200) with a replaceable core (210), said core (210) being selected from a kit of cores of varying weights; and/or
ii) a replaceable piston or spear, said piston or spear being selected from a kit of pistons or spears of varying weights;
- a housing (300) with an entrance (310);
- an insert (400) adapted for releasably fastening in said entrance (310) and adapted for restricting the width and/or height of said entrance (310);
- a channel or a hallway (500) leading to said entrance (310); said channel or hallway (500) comprising one or more entry openings (510);
**characterized in that** said entry openings (510) in said channel or hallway (500) are provided with one or more rows of serrated protrusions (520).

2. The rechargeable trap (100) according to claim 1, wherein said killing means is according to option i), and further comprises:
- a kit of cores of varying weights adapted for replacing said replaceable core (210).

3. The rechargeable trap (100) according to claim 2, wherein said piston or spear (200) comprises a cavity (220) adapted for receiving a threaded core (210).

4. The rechargeable trap (100) according to claim 2, wherein said piston or spear comprises a cavity adapted for receiving said core.

5. The rechargeable trap (100) according to any one of the claims 1-4, wherein said entry openings (510) being of similar in size as said insert (400).

6. The rechargeable trap (100) according to any one of the claims 1-5, wherein said entry openings (510) being adapted for receiving an insert adapted for restricting the size of said entry opening (510).

7. The rechargeable trap (100) according to any one of the claims 1-6, wherein the insert (400) comprises an opening sized and shaped to prevent a rat from passing therethrough, and at the same time allowing a mouse to pass, preferably having an opening with a diameter of 5-18 mm.

8. The rechargeable trap (100) according to any one of the claims 1-6, wherein the insert (400) comprises an opening sized and shaped to prevent a bird and/or a squirrel from passing therethrough, and at the same time allowing a rat to pass, preferably having an opening with a diameter of 19-30 mm.

9. The rechargeable trap (100) according to any one of the claims 1-6, further comprising a kit of inserts (400), wherein said kit of inserts (400) comprises:
- a first insert with an opening having a diameter of 5-18 mm, and preferably a diameter of 10-17 mm, and even more preferably a diameter of 15-17 mm; and
- a second insert with an opening having a diameter of 19-30 mm, and preferably a diameter of 20-28 mm, and even more preferably a diameter of 22-24 mm.

10. The rechargeable trap (100) according to any one of the claims 1-9, wherein the insert (400) is perforated with holes and/or slots, preferably, the holes have a diameter of 3-8 mm, and preferably, the slots have a width of 3-8 mm.

11. A method of preparing a rechargeable trap (100) for a specific target species comprising the steps of:
a) determining which species to target;
b) providing a trap (100) according to any one of the claims 1-10;
c1) selecting a piston or spear from a kit of pistons or spears of varying weights, said piston or spear suitable for killing said specific target species; and/or
c2) selecting a core (210) from a kit of cores of varying weights and suitable for being load into a piston or spear (200) of said trap (100) to provide a piston or spear with a suitable weight for killing said specific target species; and
d) installing said piston or spear (200) into said trap (100).

## Patentansprüche

1. Wiederaufladbare Falle (100), umfassend:
ein federbetriebenes und/oder gasdruckbetriebenes Tötungsmittel (110); das Tötungsmittel Folgendes umfassend:
i) einen Kolben oder Speer (200) mit einem austauschbaren Kern (210), wobei der Kern (210) aus einem Satz von Kernen mit unterschiedlichem Gewicht ausgewählt ist; und/oder
ii) einen austauschbaren Kolben oder Speer, wobei der Kolben oder Speer aus einem Satz von Kolben oder Speeren mit unterschiedlichem Gewicht ausgewählt ist;
ein Gehäuse (300) mit einem Eingang (310);
einen Einsatz (400), der geeignet ist, lösbar in dem Eingang (310) befestigt zu werden, und der geeignet ist, die Breite und/oder Höhe des Eingangs (310) zu beschränken;
einen Kanal oder einen Gang (500), der zu dem Eingang (310) führt; der Kanal oder der Gang (500) eine oder mehrere Eingangsöffnungen (510) umfassend;
**dadurch gekennzeichnet, dass** die Eingangsöffnungen (510) in dem Kanal oder Gang (500) mit einer oder mehreren Reihen von gezackten Vorsprüngen (520) bereitgestellt sind.

2. Wiederaufladbare Falle (100) nach Anspruch 1, wobei das Tötungsmittel gemäß Option i) ist und ferner umfasst:
einen Satz von Kernen mit unterschiedlichem Gewicht, die zum Austauschen des austauschbaren Kerns (210) geeignet sind.

3. Wiederaufladbare Falle (100) nach Anspruch 2, wobei der Kolben oder Speer (200) einen Hohlraum (220) umfasst, der zum Aufnehmen eines Gewindekerns (210) geeignet ist.

4. Wiederaufladbare Falle (100) nach Anspruch 2, wobei der Kolben oder Speer einen Hohlraum umfasst, der zum Aufnehmen des Kerns geeignet ist.

5. Wiederaufladbare Falle (100) nach einem der Ansprüche 1-4, wobei die Eingangsöffnungen (510) von einer ähnlichen Größe wie der Einsatz (400) sind.

6. Wiederaufladbare Falle (100) nach einem der Ansprüche 1-5, wobei die Eingangsöffnungen (510) zum Aufnehmen eines Einsatzes geeignet sind, der zum Beschränken der Größe der Eingangsöffnung (510) geeignet ist.

7. Wiederaufladbare Falle (100) nach einem der Ansprüche 1-6, wobei der Einsatz (400) eine Öffnung umfasst, die so bemessen und geformt ist, dass eine Ratte daran gehindert wird, hindurchzugehen, und gleichzeitig einer Maus den Durchgang ermöglicht, wobei die Öffnung vorzugsweise einen Durchmesser von 5 bis 18 mm aufweist.

8. Wiederaufladbare Falle (100) nach einem der Ansprüche 1-6, wobei der Einsatz (400) eine Öffnung umfasst, die so bemessen und geformt ist, dass ein Vogel und/oder ein Eichhörnchen daran gehindert wird, hindurchzugehen, und gleichzeitig einer Ratte den Durchgang ermöglicht, wobei die Öffnung vorzugsweise einen Durchmesser von 19 bis 30 mm aufweist.

9. Wiederaufladbare Falle (100) nach einem der Ansprüche 1-6, ferner einen Satz von Einsätzen (400) umfassend, wobei der Satz von Einsätzen (400) Folgendes umfasst:
einen ersten Einsatz mit einer Öffnung mit einem Durchmesser von 5 bis 18 mm und vorzugsweise einem Durchmesser von 10 bis 17 mm und noch bevorzugter einem Durchmesser von 15 bis 17 mm; und
einen zweiten Einsatz mit einer Öffnung mit einem Durchmesser von 19 bis 30 mm und vorzugsweise einem Durchmesser von 20 bis 28 mm und noch bevorzugter einem Durchmesser von 22 bis 24 mm.

10. Wiederaufladbare Falle (100) nach einem der Ansprüche 1-9, wobei der Einsatz (400) mit Löchern und/oder Schlitzen perforiert ist, wobei die Löcher vorzugsweise einen Durchmesser von 3 bis 8 mm und die Schlitze vorzugsweise eine Breite von 3 bis 8 mm aufweisen.

11. Verfahren des Vorbereitens einer wiederaufladbaren Falle (100) für eine spezifische Zielspezies, die Folgenden Schritte umfassend:
a) Bestimmen der Zielspezies;
b) Bereitstellen einer Falle (100) nach einem der Ansprüche 1-10;
c1) Auswählen eines Kolbens oder Speers aus einem Satz von Kolben oder Speeren mit unterschiedlichem Gewicht, wobei der Kolben oder Speer zum Töten der spezifischen Zielspezies geeignet ist; und/oder
c2) Auswählen eines Kerns (210) aus einem Satz von Kernen mit unterschiedlichem Gewicht und passend zum Bestücken eines Kolbens oder Speers (200) der Falle (100), um einen Kolben oder Speer mit einem geeigneten Gewicht zum Töten der spezifischen Zielspezies bereitzustellen; und
d) Einbauen des Kolbens oder Speers (200) in die Falle (100).

## Revendications

1. Piège rechargeable (100) comprenant :
- un moyen de destruction (110) entraîné par un ressort et/ou entraîné par pression de gaz ; ledit moyen de destruction comprenant :
i) un piston ou une lance (200) avec un noyau remplaçable (210), ledit noyau (210) étant sélectionné parmi un kit de noyaux de poids variables ; et/ou
ii) un piston ou une lance remplaçable, ledit piston ou ladite lance étant sélectionné(e) parmi un kit de pistons ou de lances de poids variables ;
- un boîtier (300) avec une entrée (310) ;
- un insert (400) adapté pour se fixer de manière amovible dans ladite entrée (310) et adapté pour restreindre la largeur et/ou la hauteur de ladite entrée (310) ;
- un canal ou un couloir (500) menant à ladite entrée (310) ; ledit canal ou couloir (500) comprenant une ou plusieurs ouvertures d'entrée (510) ;
**caractérisé en ce que** lesdites ouvertures d'entrée (510) dans ledit canal ou couloir (500) sont pourvues d'une ou plusieurs rangées de saillies dentelées (520).

2. Piège rechargeable (100) selon la revendication 1, dans lequel ledit moyen de destruction est selon l'option i), et comprend également :
- un kit de noyaux de poids variables adapté pour remplacer ledit noyau remplaçable (210).

3. Piège rechargeable (100) selon la revendication 2, dans lequel ledit piston ou ladite lance (200) comprend une cavité (220) adaptée pour recevoir un noyau fileté (210).

4. Piège rechargeable (100) selon la revendication 2, dans lequel ledit piston ou ladite lance comprend une cavité adaptée pour recevoir ledit noyau.

5. Piège rechargeable (100) selon l'une quelconque des revendications 1 à 4, dans lequel lesdites ouvertures d'entrée (510) sont de taille similaire à celle dudit insert (400).

6. Piège rechargeable (100) selon l'une quelconque des revendications 1 à 5, dans lequel lesdites ouvertures d'entrée (510) sont adaptées pour recevoir un insert adapté pour restreindre la taille de ladite ouverture d'entrée (510).

7. Piège rechargeable (100) selon l'une quelconque des revendications 1 à 6, dans lequel l'insert (400) comprend une ouverture dimensionnée et formée pour empêcher un rat de passer à travers celle-ci, et en même temps permettant à une souris de passer, ayant de préférence une ouverture d'un diamètre de 5 à 18 mm.

8. Piège rechargeable (100) selon l'une quelconque des revendications 1 à 6, dans lequel l'insert (400) comprend une ouverture dimensionnée et formée pour empêcher un oiseau et/ou un écureuil de passer à travers celle-ci, et en même temps permettant à un rat de passer, ayant de préférence une ouverture d'un diamètre de 19 à 30 mm.

9. Piège rechargeable (100) selon l'une quelconque des revendications 1 à 6, comprenant également un kit d'inserts (400), dans lequel ledit kit d'inserts (400) comprend :
- un premier insert avec une ouverture ayant un diamètre de 5 à 18 mm, et de préférence un diamètre de 10 à 17 mm, et encore plus préférablement un diamètre de 15 à 17 mm ; et
- un second insert avec une ouverture ayant un diamètre de 19 à 30 mm, et de préférence un diamètre de 20 à 28 mm, et encore plus préférablement un diamètre de 22 à 24 mm.

10. Piège rechargeable (100) selon l'une quelconque des revendications 1 à 9, dans lequel l'insert (400) est perforé de trous et/ou de fentes, de préférence, les trous ont un diamètre de 3 à 8 mm, et de préférence, les fentes ont une largeur de 3 à 8 mm.

11. Procédé de préparation d'un piège rechargeable (100) pour une espèce cible spécifique comprenant les étapes consistant à :
a) déterminer quelle espèce cibler ;
b) fournir un piège (100) selon l'une quelconque des revendications 1 à 10 ;
c1) sélectionner un piston ou une lance parmi un kit de pistons ou de lances de poids variables, ledit piston ou ladite lance étant approprié(e) pour tuer ladite espèce cible spécifique ; et/ou
c2) sélectionner un noyau (210) parmi un kit de noyaux de poids variables et approprié pour être chargé dans un piston ou une lance (200) dudit piège (100) afin de fournir un piston ou une lance d'un poids approprié pour tuer ladite espèce cible spécifique ; et
d) installer ledit piston ou ladite lance (200) dans ledit piège (100).
